(19) Europäisches Patentamt
European Patent Office
Office européen des brevets

(11) Publication number: 0 361 685 B1

(12) # EUROPEAN PATENT SPECIFICATION

(45) Date of publication of patent specification: **19.01.94** (51) Int. Cl.[5]: **B01J 39/20**

(21) Application number: **89308708.0**

(22) Date of filing: **29.08.89**

(54) **Ion exchange resins.**

(30) Priority: **06.09.88 US 240989**

(43) Date of publication of application:
**04.04.90 Bulletin 90/14**

(45) Publication of the grant of the patent:
**19.01.94 Bulletin 94/03**

(84) Designated Contracting States:
**AT BE CH DE ES FR GB GR IT LI LU NL SE**

(56) References cited:
**US-A- 3 252 921**

**ING. ENG. CHEM. PROD. RES. DEVELOP., vol. 11, no. 1, 1972, pages 97-105; L.P. McMASTER et al.: "Preparation and characterization of a modified ion-exchange resin"**

**Z. ANAL. CHEM., vol. 249, 1970, pages 182-186; M. SKAFI et al.: "Darstellung und Eigenschaften oberflächlich sulfonierter Harzaustauscher"**

(73) Proprietor: **ROHM AND HAAS COMPANY**
**Independence Mall West**
**Philadelphia Pennsylvania 19105(US)**

(72) Inventor: **Fries, William**
**339 Maple Avenue**
**Southampton Pennsylvania 18966(US)**
Inventor: **Naples, John Otto**
**1570 Dreshertown Road**
**Dresher Pennsylvania 19025(US)**

(74) Representative: **Tanner, James Percival et al**
**ROHM AND HAAS (UK) LTD.**
**European Operations Patent Department**
**Lennig House**
**2 Mason's Avenue**
**Croydon CR9 3NB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 361 685 B1

## Description

This invention is concerned with partially functionalized strong acid cation exchange resins, a process for making such resins, and the use of such resins in chromatographic separations and ion exchange processes.

The kinetic advantage of a resin having a short diffusion path has long been recognized in the ion exchange art; it allows rapid access to ion exchange sites located within a resin bead, and a more rapid approach to equilibrium during column treatment of fluids. Early attempts at producing ion exchange resins with superior kinetics involved reducing the size of resin particles, but such an approach quickly leads to excessive pressure drop across a bed of fine particles. The macroreticular resins of Meitzner et al., U.S.-A-4,224,415 were another approach to improved kinetics; large pores in the resin beads permitted ready access to the interior of the resin, where diffusion required only a short path to reach active exchange sites. Such resins have a lower ion exchange capacity per unit volume than gel resins, and require a more complex manufacturing process. Even these resins possess relatively inaccessible exchange sites.

Others have produced heterogeneous beads of copolymer surrounding inert central cores, as of glass or a different, inert copolymer. In general, such heterogeneous beads suffer from excessive breakage during functionalization and use. The reason for this breakage is that the ion exchange resin shell swells as it becomes wetted with water, and changes dimension significantly during the changes in ionic form that accompany loading and regeneration cycles. As the inert core tends not to participate in such dimensional changes, the particle becomes severely stressed at the interface between the core and the functionalized polymer, and tends to fracture. Radiation post-grafting can strengthen such particles, but it is an additional, costly process, and the additional crosslinking it introduces would tend to retard the desired internal diffusion.

Strongly acidic cation exchange resins commonly are functionalized with sulfonic acid exchange sites. Techniques for sulfonating ion exchangers have evolved from early studies of various organic materials. When spherical copolymer beads produced by suspension polymerization came to be the preferred carriers of ion exchange functionality, it was found that they could not be practically sulfonated merely by heating them with concentrated sulfuric acid; the beads broke during the subsequent quench of the acid, and any beads that survived were highly stressed and would tend to break in use during the stress of the loading and regeneration cycle. This problem was solved by swelling the beads with an organic solvent, which allowed the sulfuric acid to easily and uniformly penetrate the beads. Stress induced during sulfonation and quenching was easily relieved in the swollen copolymer, and the resulting sulfonated beads were satisfactory in their resistance to breakage. Variations of solvent-swollen sulfonation became the industry standards for producing strongly acidic ion exchange resins.

It is well known that sulfuric acid sulfonation proceeds from the outside surface inward on a homogeneous aromatic copolymer particle and that the reaction can be stopped before the particle has been completely sulfonated, merely by quenching it with water before the acid has fully penetrated the particle. The resulting particle has a sulfonated, hydrophilic outer shell and an unsulfonated, hydrophobic inner core. The stress problems encountered with sulfonation in the absence of solvent were magnified by this combination in the partially sulfonated bead, because the sulfonated outer shell swells in use in aqueous liquids at a different rate from the unsulfonated core. Solvent swelling the copolymer beads prior to partial sulfonation reduces the initial stress in the beads, and Hansen et al., U.S.-A-3,252,921, observed an increase in bead stability when a thin outer shell of solvent-swollen beads was sulfonated with chlorosulfonic acid or sulfur trioxide. The Hansen reference taught that sulfonation of more than 65% of the available aryl nuclei was deleterious to the stability of the bead, and taught a useful range for sulfonation of 8 to 65% of the available aryl nuclei. From the geometry of a sphere one can readily see that the thickness of the outer shell would be about 3 to 30% of the bead radius with such a range of sulfonation.

In Ind. Eng. Chem. Prod. Res. Develop., Vol 11, No. 1, 1972, pages 97-105, there is disclosed the production of surface functionalized strong acid cation exchange resin beads, having a particle size of 2 - 3 mm, by extruding a solution of linear polystyrene and divinylbenzene in styrene monomer into an aqueous medium where they are polymerized. The formed polymer beads are subsequently functionalized using chlorosulfonic acid in a swelling solvent (i.e. ethylene dichloride) and, following functionalization, the beads are washed with excess ethylene dichloride to remove residual chlorosulfonic acid, and methanol is gradually added to the beads until they are in pure methanol solvent. However, Table IV on age 100 of this Article indicates that broken beads are produced as a result of this procedure.

We have now developed physically stable ion exchange resin particles which bear their ion exchange functionality only in the portion of the particle most readily accessible to diffusion.

The present invention provides strong acid cation exchange resin particles comprising crosslinked copolymer in which from 68% to 98% of the available functionalizable sites are functionalized with strong acid cation exchange functional groups, and the remaining, unfunctionalized, available functionalizable sites are those sites least accessible to diffusion, and wherein the particles are functionalized in the absence of any swelling solvent.

The present invention also provides a process for making strong acid cation exhcnage resin particles characterized in that the process comprises treating crosslinked copolymer particles with a strong acid, cation exchange functionalizing reagent under conditions such that the functionalization reaction proceeds at a more rapid rate than the rate of diffusion of the functionalizing reagent into the particles, and halting the functionalization reaction when from 68% to 98% of the available functionalizable sites are functionalized, and wherein the functionalizing reagent does not contain any swelling solvent.

The invention further encompasses a process for exchanging ions between a liquid containing dissolved ions and an ion exchange resin, which comprises passing the liquid through a bed of the strong acid cation exchange resin particles at a rate faster than that which would permit diffusion equilibrium in a fully functionalized resin of the same particle, wherein the strong acid cation exchange resin particles are resin particles as defined above.

The strong acid cation exchange resins of the present invention may have the physical form of gel beads, e.g. spherical gel beads, or macroporous beads, including macroreticular beads, or comminuted resin particles which are gel or macroporous resin. Such comminuted particles may be derived from bulk-polymerized or suspension-polymerized polymers using known comminution techniques.

One desirable form of functionalization is sulfonation, and the present invention is capable of providing partially sulfonated resins which are significantly better able to withstand the stress of the loading and regeneration cycle in aqueous ion exchange applications than resins formed by sulfonating conventional copolymers either in the solvent-swollen or non-swollen state.

Preferred ion exchange resin particles are those prepared by functionalizing crosslinked, suspension-polymerized copolymer beads which are well known in the art as precursors for ion exchange resins. Gel copolymer beads functionalized according to the present invention bear their functional groups in an outer shell of uniform depth. Because the functionalization processes used to prepare these beads penetrate the copolymer at a uniform rate, the thickness of the functionalized layers tends to be uniform for all beads regardless of bead size, provided only that the smallest beads are not completely functionalized e.g. not completely sulfonated. As a result, the diffusion paths are highly uniform, regardless of the uniformity of bead size.

In one embodiment of the invention the strong acid cation functional groups are in an outer layer of the particle, the average depth of the layer being from about 0.32 to about 0.75 times the total radius of the particle.

The properties of short and uniform diffusion paths with little reduction in volume capacity possessed by the particles of the invention provide superior ion exchange kinetics when compared with conventional, fully functionalized particles. These properties make the particles of the present invention particularly well suited for such applications as chromatographic separations, especially preparative-scale separations. Additionally, the strong acid cation exchange resins of the present invention can have enhanced oxidative stability and crush resistance when compared to fully functionalized resins, as well as significantly shorter, uniform diffusion paths.

The unique morphology of the resin particles of the present invention means that they are generally inhomogeneous in composition and inhomogeneous in relative swelling rate in ion-containing liquids. This causes high stress at the sites of inhomogeneity during use; strong copolymer particles are therefore especially preferred, such as the copolymer beads described by Howell in U.S.-A-4,431,785 and 4,283,449, or by Dales in U.S.-A-4,192,921, which are hereby incorporated into the present specification by reference.

In the resin particles of the present invention from about 68% to about 98% of the copolymer sites available for functionalization are actually functionalized. A highly useful range of functionalization levels is from about 70% to about 95% of the available sites, and particularly from about 70 to about 90% of the available sites. In the case of spherical gel particles, the depth of the functionalized shell may be calculated readily from the functionalization level using the geometry of the spherical bead. Thus the functionalization level is

$$\frac{V_s}{V_t} \times 100$$

where $V_s$ is the volume of the functionalized shell, and $V_t$ is the total volume of the bead. $V_t = 4/3\pi r_t^3 = 4.189\ r_t^3$ where $r_t$ is the total radius of the bead. $V_s = V_t - V_c$, where $V_c$ is the volume of the unfunctionalized core. The functionalization level then becomes

$$\frac{V_t - V_c}{V_t} \times 100$$

$$= \frac{4.189\ (r_t^3 - r_c^3)}{4.189\ \ r_t^3} \times 100$$

$$= \frac{r_t^3 - r_c^3}{r_t^3} \times 100$$

where $r_t$ is the total radius of the bead and $r_c$ is the radius of the unfunctionalized core. If $r_t$ is taken as 1, then the functionalization level becomes $(1 - r_c^3) \times 100$. Thus where the core radius is 0.27 the functionalization level is (1 - 0.020) x 100 = 98% and the shell depth is 1 - 0.27 = $0.73r_t$. Correspondingly, when the core radius is 0.68 the functionalization level is (1 - 0.31) x 100 = 69% and the functionalized shell depth is 1 - 0.68 = $0.32r_t$.Comparison of ion exchange capacity with microscopically observed shell depth confirms this relationship.

Monomers suitable for preparing crosslinked copolymer beads are well known in the art. Suitable monomers include monovinyl aromatic monomers, for example, styrene, vinyltoluene, vinyl naphthalene, ethyl vinyl benzene, vinyl chlorobenzene, chloromethylstyrene and the like, which may comprise from about 50 to about 99.5 mole percent, preferably 80 to about 99 mole percent, of the monomers from which the copolymer is made, and polyvinyl monomers having at least two active vinyl groups polymerizable with the monovinyl monomer, which may comprise from about 0.5 to about 50 mole percent, preferably from 1 to about 20 mole percent, of the monomers from which the copolymer is made. Examples of suitable polyvinyl monomers include divinylbenzene, trimethylolpropane trimethacrylate, ethylene glycol dimethacrylate, divinyltoluene, trivinylbenzene, divinylchlorobenzene, diallyl phthalate, divinylpyridine, divinylnaphthalene, ethylene glycol diacrylate, neopentyl glycol dimethacrylate, diethylene glycol divinyl ether, bis-phenol-A-dimethacrylate, pentaerythritol tetra- and trimethacrylates, divinyl xylene, divinylethylbenzene, divinyl sulfone, divinyl ketone, divinyl sulfide, allyl acrylate,diallyl maleate, diallyl fumarate, diallyl succinate, diallyl carbonate, diallyl malonate, diallyl oxylate, diallyl adipate, diallyl sebacate, diallyl tartrate, diallyl silicate, diallyl tricarballylate, triallyl aconitate, triallyl citrate, triallyl phosphate, N,N'-methylene-diacrylamide, N,N'-methylene-dimethacrylamide, N,N'-ethylenediacrylamide, trivinyl naphthalene, polyvinylanthracenes and the polyallyl and polyvinyl ethers of glycol, glycerol, pentaerythritol, resorcinol, and the monothio and dithio derivatives of glycols. The monomer mixture may also contain up to about 5 mole percent of other vinyl monomers which do not affect the basic nature of the resulting resin matrix, for example, acrylonitrile, butadiene, methacrylic acid and others known in the art. In one embodiment of the invention, the copolymer particles are acrylic ester copolymer particles.

Both the gel polymerization and the macroreticular polymerization are well-known techniques for making copolymer particles as intermediates for ion exchange resins. Preferred are suspension polymerization

techniques which produce copolymer beads in the range of from about 10 µm to about 2mm, and more preferably from about 25 µm to about 1mm; these techniques are similarly well-known.

Polymerization of the high-strength copolymers, useful in preparing the resins of the present invention, is characterized by polymerizing the above-described monomers in the presence of a free-radical initiator and oxygen at a reaction temperature from about 30° to about 95°C, preferably 50° to about 70°C, the free-radical initiator being suitable for catalyzing polymerization at such temperatures, or in the presence of such an initiator and a reaction rate moderator, the moderator being an organic compound containing acetylenic or allylic unsaturation, said compound being capable of moderating the rate of polymerization, as for example, phenylacetylene, terpinolene, bicycloheptadiene, dimethyloctatriene, dimer of cyclopentadiene, dimer of methylcyclopentadiene, terpenes, 2-methylstyrene, alpha-methylstyrene dimer, limonene, cyclohexadiene, methylcyclohexadiene, camphene, geraniol, farnesol, 2-norbornene, cyclododecatriene, cyclohexadiene, cyclododecane, allylbenzene, 4-vinyl-1-cyclohexene, and the like, or in the presence of a peroxy initiator having the formula

$$(R_1-\overset{\overset{O}{\|}}{C}-O-O)_x\ R_2$$

wherein $R_1$ is a branched alkyl of 3 to 12 carbon atoms and having a secondary or tertiary carbon linked to the carbonyl group and x is a positive integer having a value of either 1 or 2 and where x is 1, $R_2$ is a branched alkyl radical containing a tertiary carbon attached to the oxygen and where x is 2, $R_2$ is an alkylene or aralkylene in either case terminating in tertiary carbons attached to the oxygen, or of the formula

$$Y-O\overset{\overset{O}{\|}}{C}-O-O-\overset{\overset{O}{\|}}{C}O-Z$$

wherein Y and Z are independently selected from lower alkyl, cycloalkyl, alkyl-substituted cycloalkyl and aralkyl. Additional description of the preparation of the copolymers may be found in the above-incorporated U.S. Patents.

The process by which the resins of the present invention may be prepared comprises treating crosslinked, copolymer particles with a functionalizing reagent under conditions such that the functionalization reaction proceeds at a more rapid rate than the rate of diffusion of the functionalizing reagent into the particles, and halting the functionalization reaction when at least 68% to 98% of the available functionalizable sites are functionalized. One practical level of functionalization occurs when from about 70 to about 98% of the available sites are functionalized; at other times one may prefer that up to about 95% are functionalized, and at still other times one may prefer that up to about 90% are functionalized. For example, when the copolymer particles are gel copolymer particles, the functionalization may be halted when the depth of functionalization is from 0.32 to about 0.75 times the average radius of the particle.

Under such reaction conditions the diffusion rate may be considered the limiting rate for the reaction. The reagent functionalizes all of the available functionalizable sites it first contacts before diffusing farther into the particle and contacting a new, deeper population of available functionalizable sites.

One skilled in the art can select a particular functionalization reaction, and conditions for that reaction, in which the diffusion rate is the limiting reaction rate; before the particles are fully functionalized the progress of the reaction may be halted, or the functionalization reagent may be exhausted, and ion exchange resins of the present invention will result.

To prepare strongly acidic cation exchange resins of the present invention, the above copolymers may be sulfonated, in the absence of any swelling solvent, and in the presence of strong sulfuric acid solutions or mixtures of sulfuric with other non-swelling sulfonating agents. Consistent with the above description of the manner in which this process occurs, the sulfonation reaction is quite rapid, while the diffusion of sulfuric acid into unswollen copolymer is relatively very slow, hence the progress of the reaction is controlled by the diffusion rate. The sulfonation is quenched by the addition of a large excess of water to the mixture of acid and copolymer particles when the desired sulfonation depth has been reached. Because the sulfonated outer layer and the unsulfonated inner core of the resin tend to have different refractive

indices, the interface between them may be visually observed in many transparent beads as a visible irregular interface when viewed in normal light under a microscope. Often this interface appears as a highly irregular band concentric to the bead center. Because of this irregularity, the depth of the outer, sulfonated layer is taken to be the distance between the outer bead surface and the average penetration of sulfonation into the bead.

The following examples are intended to illustrate but not limit the invention. All percentages and proportions are by weight unless otherwise indicated, and all reagents are of good commercial quality unless otherwise indicated.

Example 1

This Example sets forth a general procedure by which gel copolymer beads may be sulfonated to produce strong-acid, cation-exchange resins according to the present invention. A 20-gram portion of dry, gel copolymer beads is added to a round-bottom flask containing 100-200 ml of concentrated sulfuric acid. The flask contents are heated to 120 °C while stirring. The degree of sulfonation of the beads is monitored by withdrawing bead samples from the flask, quenching them and examining them microscopically. When the desired degree of sulfonation is reached, as evidenced by the depth of the visible sulfonated region of the bead, the flask contents are quenched by adding a series of increasingly dilute sulfuric acid solutions to the flask, draining the liquid from the beads after each addition, and finally washing the resulting sulfonated beads with water. The major variables in this procedure are the particle size and crosslinker content of the copolymer beads, and the sulfonating reagent, its concentration, the sulfonation temperature and time. These variables are indicated where appropriate for specific Examples below.

Example 2

This Example sets forth a general procedure for sulfonating macroreticular copolymer beads to produce strong-acid, cation-exchange resins according to the present invention. A 20-gram (dry basis) portion of water-wet gel copolymer beads is transferred to a round-bottom flask. To the beads is added 100-200 ml of concentrated sulfuric acid to remove water; this acid is drained and 225 ml of fresh, concentrated sulfuric acid is added to the flask. The flask contents are heated to about 140 °C while stirring, and the degree of sulfonation of the beads is monitored by withdrawing bead samples and either determining their density or rapidly quenching them in water and examining them visually for the formation of a peeling shell. when the desired degree of sulfonation is reached, the flask contents are quenched by adding a series of increasingly dilute sulfuric acid solutions to the flask, draining the liquid from the beads after each addition, and finally washing the beads in water. The actual depth of sulfonation in the macroreticular bead may not be determined by visual inspection, as may be done with the gel beads, because the macropores in the beads give the functionalizing reagent more ready access to the bead interior than gel beads. Consequently, the most accessible functionalization sites are not necessarily closest to the surface of the beads. Therefore, the degree of functionalization must be inferred from the cation exchange capacity of the resin, or the actual distribution of the sulfonate groups within the resin bead may be determined by transmission electron microscopy of a bead section.

The variables in the process of Example 2 are the same as those of Example 1, and are given where appropriate in the Examples below.

Examples 3-8

These Examples illustrate the effects of varying sulfonation depth on the ion exchange kinetic performance of the resin, as indicated by the resin performance in sugar chromatography.

A series of six resins were prepared according to the procedure of Example 1 from a styrene-6% divinylbenzene copolymer having a nominal 280 µm diameter and a uniformity coefficient of 1.1. The uniformity coefficient is determined by sieve analysis of the beads; it is calculated as the ratio of the mesh size, in millimeters, of the screen upon which 40% of the sample weight is retained, to the mesh size of the screen upon which 90% of the sample weight is retained. The sulfonation was stopped at times such that the functionalization depths and functionalized depth-to-total ratio values shown in Table I were obtained. The resins were placed in six individual columns of 2.5-cm diameter and 120-cm length, taking care to avoid classification of the resin beads by size. Each column was heated to 60 °C and charged with a 42% fructose-58% glucose sugar syrup having 50% solids, the charge volume being 7.5 volume percent of the resin bed volume. The syrup was eluted with deionized water at a flow rate of 0.3 bed volumes per minute,

with the sugar concentration in the eluate being continuously monitored, until all the sugar had eluted. The baseline separation between the fructose and glucose peaks on the resulting chromatogram, and the maximum fructose concentration in the eluate, are shown in Table I. "% Baseline Separation" may be calculated by constructing a first line tangent to the maxima of the two chromatogram peaks for which the separation is being determined, constructing a second line perpendicular to the baseline, passing through the center of the "valley" between the two maxima, and intersecting the first line, and measuring the distance from the first line along the second line to the baseline and to the intersection with the chromatogram curve. The calculation of % Baseline Separation becomes ((First Line to Chromatogram Curve)/(First Line to Baseline)) x 100. As may be seen from Table I, the most efficient resins for the chromatographic separation of fructose from glucose are not the most completely sulfonated ones, but rather those with intermediate sulfonation levels bearing the sulfonic groups in the outer portion of the beads.

Table I

| Example | Resin Bead Radius µm | Functionalization Depth µm | Functionalized Depth to Total Radius Ratio | Chromatography | |
|---|---|---|---|---|---|
| | | | | Baseline Separation % | Maximum Fructose Concentration,% |
| 3 | 140 | 0 | 0.00 | 0 | -- |
| 4 | 160 | 62 | 0.39 | 45 | 11.4 |
| 5 | 161 | 72 | 0.45 | 53 | 13.0 |
| 6 | 163 | 88 | 0.54 | 63 | -- |
| 7 | 165 | 148 | 0.90 | 62 | 11.8 |
| 8 | 172 | 172 | 1.00 | 60 | 10.3 |

Example 9

This Example compares a partially sulfonated resin of the present invention with a fully sulfonated, conventional resin for productivity in sugar chromatography. Productivity measures the grams of 90% fructose syrup obtained from the chromatographic process versus the grams of 42%-fructose syrup treated by the process. The resins used were prepared according to Example 1 using styrene-6% divinylbenzene copolymer; resin A was a fully sulfonated, conventional resin while resin B was sulfonated to a functionalized depth-to-total radius ratio of 0.72. The results of sugar chromatography using these two resins at varying rates of sugar-syrup feed are shown in Table II.

Table II

| Sugar Syrup Feed Rate, g/liter of resin/day | 90% Fructose Produced, g/liter of resin/day | |
|---|---|---|
| | Resin A (Conventional) | Resin B (Present Invention) |
| 600 | 240 | 240 |
| 800 | 275 | 275 |
| 1000 | 240 | 275 |
| 1200 | 140 | 285 |
| 1400 | <100 | 290 |

The kinetic superiority of the resins of the present invention may be seen from these results. At lower feed rates, where diffusion equilibrium is more closely approached by both resins, each performs identically. As the feed rates increase and the diffusion kinetics become more important, the productivity of the conventional resin deteriorates while the productivity of the resin of the present invention continues to improve.

Example 10

This Example illustrates the advantage of the superior kinetics of the resins of the present invention in cleaning the resin of treated solutions. The resins used for this Example were prepared from copolymer of styrene-6% divinylbenzene having a mean particle size of about 350 µm and a uniformity coefficient of 1.1; they were sulfonated according to the procedure of Example 1 such that the ratio of sulfonation depth to total radius was 1.00 for Resin A (fully sulfonated), 0.72 for Resin B and 0.39 for Resin C. The resins were saturated with a 45% glucose syrup and then washed at a rate of 8 bed volumes per hour with 60 °C water. As may be seen from Table III, the resins with the thinner sulfonation radii were more easily washed of the sugar syrup.

Table III

| Resin | Minutes to Reach Indicated Sugar Concentration | | | |
|---|---|---|---|---|
| | 10% | 5% | 3% | 1% |
| A | 125 | 136 | 145 | 174 |
| B | 85 | 96 | 105 | 150 |
| C | 76 | 84 | 95 | 145 |

Example 11

In addition to being useful for sugar chromatography, the resins of the present invention are also useful in other ion exchange applications. This Example illustrates their use for softening water. Three resins were prepared by sulfonating a copolymer of styrene-8% divinylbenzene according to the procedure of Example 1. The resulting resins had a diameter of about 650 µm and a uniformity coefficient of about 1.6. Resin A had a functionalized depth-to-total radius ratio of 0.32, Resin B had a ratio of 0.46, and Resin C had a ratio of 1.00 (fully sulfonated, conventional resin). Each resin was packed in a 350-ml, 2.5-cm-diameter bed and was used to treat water containing 1168 ppm $CaCl_2$ at a flow rate of 0.40 bed volumes per minute. Each resin was then regenerated with NaCl brine. The cation exchange capacity of the resin that was actually used, in milliequivalents of calcium per milliliter of resin, the average leakage of calcium ions, in ppm, to breakthrough (the point at which leakage begins to rise significantly), and the regeneration efficiency (ratio of milliequivalents of cation removed from treated water to milliequivalents of regenerant passed through the resin during regeneration, expressed as a percentage) at various levels of brine regeneration were determined and are shown in Table IV.

Table IV

| Resin | Fraction of Resin Sulfonated | Regeneration Level g/Liter of Resin | Utilized Capacity meq/ml | Regeneration Efficiency % | Mean Leakage to Breakthru ppm Ca |
|---|---|---|---|---|---|
| A | 0.69 | 56 | 0.942 | 98 | 6 |
| B | 0.87 | 56 | 0.864 | 90 | 7 |
| C | 1.00 | 56 | 0.627 | 65 | 10 |
| A | 0.69 | 80 | 0.951 | 69 | 3 |
| B | 0.87 | 80 | 0.919 | 67 | 3 |
| C | 1.00 | 80 | 0.663 | 48 | 3 |
| A | 0.69 | Full | 1.532 | -- | 0 |
| B | 0.87 | Full | 1.765 | -- | 0 |
| C | 1.00 | Full | 1.596 | -- | 0 |

As may be seen from the above results, the capacity of the resins which was actually available to participate in the cation exchange was greater in the resins of the present invention which were not fully sulfonated, even though the fully sulfonated resins contained more sulfonic groups per particle. The regeneration efficiencies of the resins of the present invention were also greater than that of the conventional, fully sulfonated resin.

Example 12

This Example illustrates that the resins of the present invention may also be used in mixed-bed applications; sulfonated resins of the present invention are used with conventional anion-exchange resins to treat water containing dissolved salt. The resulting effluent has a superior quality and the resin capacity is greater, when compared to fully sulfonated cation-exchange resins.

The resins were prepared according to Example 1 from styrene-8% divinylbenzene copolymer. They were sulfonated such that Resin A had a functionalized depth-to-total radius ratio of 0.40, Resin B had a ratio of 0.50, Resin C had a ratio of 0.63, and Resin D was a fully sulfonated, conventional cation-exchange resin (ratio = 1.00); the resins had a mean diameter of about 650 µm and a uniformity coefficient of about 1.6. Each resin was used in a 70-ml bed, mixed 1:1 with a gel, strong-base anion-exchange resin, in individual, 1-cm-diameter columns to treat water containing 595 ppm sodium chloride. At the treatment end point (a conductivity of 5 x $10^5$ ohm-cm) treatment was stopped and the resin bed was separated and regenerated with sulfuric acid. The highest resistivity of treated water produced by each bed was recorded, as was the cation exchange capacity at 1 x $10^6$ ohm-cm and at 5 x $10^5$ ohm-cm, for resins regenerated to two different levels. These results are shown in Table V.

Table V

| Resin | Regeneration Level g/Liter of Resin | Flow Rate Liters/min. | Highest Resistivity $10^6$ ohm/cm | Resin Cation to Indicated 1x$10^6$ ohm-cm | Capacity End Point 5x$10^5$ ohm-cm |
|---|---|---|---|---|---|
| A | 64 | 11.4 | 5.0 | 0.21 meq/ml | 0.26 meq/ml |
| B | 64 | 11.4 | 6.4 | 0.21 | 0.25 |
| C | 64 | 11.4 | 5.5 | 0.24 | 0.27 |
| D | 64 | 11.4 | 4.7 | 0.21 | 0.26 |
| A | Full | 19 | 5.8 | 0.32 | 0.42 |
| B | Full | 19 | 4.3 | 0.36 | 0.47 |
| C | Full | 19 | 4.0 | 0.35 | 0.46 |
| D | Full | 19 | 3.8 | 0.35 | 0.46 |

Example 13

This Example illustrates that resins of the present invention made from macroreticular copolymers also show performance superior to that of conventional macroreticular resins.

Resins of the present invention were prepared from macroreticular copolymers according to the procedure of Example 2: the copolymers for Resins A and B contained 8% divinylbenzene, and the copolymers for Resins C and D contained 12% divinylbenzene. The sulfonated beads had a mean diameter of about 700 µm and a uniformity coefficient of about 1.5. Beds of 70 ml of each resin were prepared in 1-cm-diameter columns, and were loaded with aqueous 1000 ppm sodium chloride solution at a rate of 0.4 bed volumes/minute. The resins were regenerated to the indicated level with sulfuric acid. Capacity and leakage for these beds are shown in Table VI.

Table VI

| Resin | Regeneration Level,g/Liter of Resin | Functionalized Depth-to-Total Radius Ratio | Column Capacity (meg/ml) | Average Leakage (% of loading) (solution) |
|---|---|---|---|---|
| A | 64 | 1.00 | 0.75 | 53 |
| B | 64 | 0.35 | 0.89 | 39 |
| C | 64 | 1.00 | 0.85 | 44 |
| D | 64 | 0.74 | 0.97 | 45 |
| A | 128 | 1.00 | 0.90 | 38 |
| B | 128 | 0.53 | 1.30 | 29 |
| C | 128 | 1.00 | 1.30 | 34 |
| D | 128 | 0.50 | 1.35 | 23 |

As may be seen from the Table, the resins of the present invention showed a greater ion exchange capacity and lower leakage under conditions of multiple loading and regeneration cycles.

Example 14

This Example illustrates that the swelling of resins of the present invention is smaller than that of conventional, fully functionalized resins during normal use cycles. Resins which undergo lower swelling and contraction during loading-regeneration cycles tend to have a greater long-term stability and simplify the design of operating equipment. A series of resins were made according to the procedure of Example 1 from styrene gel copolymer having the indicated level of divinylbenzene crosslinker.

The volume of the first six resin beds was determined when the resins were wet with deionized water. A 50% glucose solution was passed through the beds until they had equilibrated with the glucose solution, and the decrease in bed volume was measured. For the remaining four resins the volume of the beds was determined when the resins were wet with deionized water following treatment with 1 N hydrochloric acid and washing with water. The resins were equilibrated with 1 N sodium hydroxide solution and rinsed with water, and the decrease in bed volume was measured. Table VII shows the results of these measurements.

Table VII

| Resin | Functionalized Depth-Total Radius Ratio | Resin DVB Level,% | Cycle Treatment | Swelling % of Bed Volume |
|---|---|---|---|---|
| A | 1.00 | 6.0 | 50% glucose/ | 4.2 |
| B | 0.72 | 6.0 | d.i. water | 3.6 |
| C | 0.54 | 6.0 | " | 2.2 |
| D | 1.00 | 5.5 | " | 5.0 |
| E | 0.80 | 5.5 | " | 4.3 |
| F | 0.70 | 5.5 | " | 4.1 |
| G | 1.00 | 8.0 | 1 N NaOH/ | 8.0 |
| H | 0.40 | 8.0 | $H_2O$/1 N HCl/ | 6.0 |
| I | 0.37 | 8.0 | $H_2O$ | 2.0 |
| J | 0.26 | 8.0 | " | 0 |

## Claims

1. Strong acid cation exchange resin particles, characterized in that the particles comprise crosslinked copolymer in which from 68% to 98% of the available functionalizable sites are functionalized with strong acid cation exchange functional groups, and the remaining, unfunctionalized, available functionalizable sites are those sites least accessible to diffusion, and wherein the particles are functionalized in the absence of any swelling solvent.

2. Resin particles according to claim 1 comprising a macroreticular copolymer.

3. Resin particles according to claim 1 wherein the particles are gel copolymer particles.

4. Resin particles according to claim 3 wherein the gel copolymer particles are spherical, gel copolymer particles.

5. Resin particles according to claim 3 or claim 4 wherein the strong acid cation exchange functional groups are in an outer layer of the particle, the average depth of the layer being from about 0.32 to about 0.75 times the total radius of the particle.

6. Resin particles according to any preceding claim wherein the strong acid cation exchange groups are sulfonic acid groups.

7. Resin particles according to any preceding claim where the strong acid cation exchange functional groups are suspension polymerized particles having a diameter from about 25 µm to about 1 mm.

8. A process for making strong acid cation exchange resin particles, characterized in that the process comprises treating crosslinked copolymer particles with a strong acid, cation exchange functionalizing reagent under conditions such that the functionalization reaction proceeds at a more rapid rate than the rate of diffusion of the functionalizing reagent into the particles, and halting the functionalization reaction when from 68% to 98% of the available functionalizable sites are functionalized, and wherein the functionalizing reagent does not contain any swelling solvent.

9. A process according to claim 8 wherein the copolymer particles are gel copolymer particles and the functionalization reaction is halted when the depth of functionalization is from 0.32 to about 0.75 times the average radius of the particles.

10. A process according to claim 9 wherein the gel copolymer particles are spherical, gel copolymer particles.

11. A process according to claim 8, wherein the copolymer particles are macroreticular copolymer particles.

12. A process according to any of claims 8 to 11 wherein the functionalizing reagent is concentrated sulfuric acid, and the copolymer particles are treated in an unswollen condition.

13. A process according to any of claims 8 to 12 wherein the particles are suspension polymerized polymer particles having a diameter of from about 25 µm to about 1 mm.

14. A process according to any of claims 8 to 11 wherein the copolymer particles are acrylic ester copolymer particles.

15. A process for exchanging ions between a liquid containing dissolved ions and an ion exchange resin, characterized in that the process comprises passing the liquid through a bed of strong acid cation exchange resin particles at a rate faster than that which would permit diffusion equilibrium in a fully functionalized resin of the same particles, wherein the strong acid cation exchange resin particles are resin particles according to any of claims 1 to 7.

## Patentansprüche

1. Stark saure Kationenaustauscher-Harzpartikel, dadurch gekennzeichnet, daß die Partikel ein quervernetztes Copolymer umfassen, in dem 68 % - 98 % der verfügbaren, funktionalisierbaren Stellen mit stark sauren Kationenaustauscher-funktionellen Gruppen funktionalisiert sind und die restlichen, nicht funktionalisierten, verfügbaren funktionalisierbaren Stellen jene sind, die mindestens für eine Diffusion zugänglich sind, und worin die Partikel in Abwesenheit eines Quell-Lösungsmittels funktionalisiert sind.

2. Harzpartikel nach Anspruch 1, umfassend ein makro-netzartiges Copolymer.

3. Harzpartikel nach Anspruch 1, worin die Partikel Gel-Copolymerpartikel sind.

4. Harzpartikel nach Anspruch 3, worin die Gel-Copolymerprtikel kugelförmige Gel-Copolymerpartikel sind.

5. Harzpartikel nach Anspruch 3 oder 4, worin die stark sauren Kationenaustauscher-funktionellen Gruppen in einer Außenschicht des Partikels sind, wobei die Durchschnittstiefe der Schicht etwa 0,32 - etwa 0,75-fach des Gesamtradius des Partikels ist.

6. Harzpartikel nach einem der vorhergehenden Ansprüche, worin die stark sauren Kationenaustauscher-Gruppen Sulfonsäuregruppen sind.

7. Harzpartikel nach einem der vorhergehenden Ansprüche, worin die stark sauren Kationenaustauscher-funktionellen Gruppen Suspensions-polymerisierte Partikel mit einem Durchmesser von etwa 25 µm bis etwa 1 mm sind.

8. Verfahren zur Herstellung von stark sauren Kationenaustauscher-Harzpartikeln, bei dem quervernetzte Copolymerpartikel mit einem stark sauren, Kationenaustauscherfunktionalisierenden Mittel unter Bedingungen behandelt werden, so daß die Funktionalisierungsreaktion mit größerer Geschwindigkeit abläuft als die Diffusionsgeschwindigkeit des funktionalisierenden Mittels in die Partikel, und die Funktionalisierungsreaktion angehalten wird, wenn 68 % bis 98 % der verfügbaren, funktionalisierbaren Stellen funktionalisiert sind, und worin das Funktionalisierungsmittel kein Quell-Lösungsmittel enthält.

9. Verfahren nach Anspruch 8, worin die Copolymerpartikel Gel-Copolymerpartikel sind und die Funktionalisierungsreaktion angehalten wird, wenn die Tiefe der Funktionalisierung 0,32 - 0,75-fach des Durchschnittsradius der Partikel ist.

10. Verfahren nach Anspruch 9, worin die Gel-Copolymerpartikel kugelförmige Gel-Copolymerpartikel sind.

11. Verfahren nach Anspruch 8, worin die Copolymerpartikel makro-netzartige Copolymerpartikel sind.

12. Verfahren nach einem der Ansprüche 8 - 11, worin das Funktionalisierungsmittel konzentrierte Schwefelsäure ist und die copolymerpartikel in einem nicht-gequollenen Zustand behandelt werden.

13. Verfahren nach einem der Ansprüche 8 - 12, worin die Partikel Suspensions-polymerisierte Polymerpartikel mit einem Durchmesser von etwa 25 µm bis etwa 1 mm sind.

14. Verfahren nach einem der Ansprüche 8 - 11, worin die Copolymerpartikel Acrylsäureester-Copolymerpartikel sind.

15. Verfahren zum Austausch von Ionen zwischen einer gelöste Ionen enthaltenden Flüssigkeit und einem Ionenaustauscherharz, bei dem die Flüssigkeit durch ein Bett von stark sauren Kationenaustauscher-Harzpartikeln mit einer Geschwindigkeit gegeben wird, die schneller ist als jene, die ein Diffusionsgleichgewicht in einem voll-funktionalisierten Harz der gleichen Partikel erlauben würde, und die stark sauren Kationenaustauscher-Harzpartikel Harzpartikel nach einem der Ansprüche 1 - 7 sind.

## Revendications

1. Particules d'une résine fortement acide échangeuse de cations, caractérisées en ce que les particules comprennent du copolymère réticulé dans lequel de 68 % à 98 % des sites disponibles pour la fixation d'un groupe fonctionnel comporte les groupes fonctionnels fortement acides échangeurs de cations, et les autres sites disponibles, pouvant comporter un groupe fonctionnel mais n'en comportant pas, sont les sites les moins accessibles à une diffusion, et les groupes fonctionnels étant fixés sur les particules en l'absence de tout solvant gonflant.

2. Particules de résine selon la revendication 1, comprenant un copolymère macroréticulaire.

3. Particules de résine selon la revendication 1, dans lesquelles les particules sont des particules d'un copolymère en forme de gel.

4. Particules de résine selon la revendication 3, dans lesquelles les particules du copolymère en forme de gel sont des particules sphériques d'un copolymère en forme de gel.

5. Particules de résine selon la revendication 3 ou la revendication 4, dans lesquelles les groupes fonctionnels fortement acides échangeurs de cations se trouvent dans une couche extérieure de la particule, la profondeur moyenne de la couche valant environ 0,32 à environ 0,75 fois le rayon total de la particule.

6. Particules de résine selon l'une quelconque des revendications précédentes, dans lesquelles les groupes fortement acides échangeurs de cations sont des groupes acide sulfonique.

7. Particules de résine selon l'une quelconque des revendications précédentes, dans lesquelles les groupes fonctionnels fortement acides échangeurs de cations sont des particules, polymérisées en suspension, ayant un diamètre d'environ 25 $\mu$m à environ 1 mm.

8. Procédé de production des particules d'une résine fortement acide échangeuses de cations, procédé caractérisé en ce qu'il comprend la soumission de particules d'un copolymère réticulé à un traitement par un acide fort, un réactif introduisant ou formant des groupes fonctionnels échangeurs de cations dans les conditions telles que la réaction d'introduction de groupes fonctionnels ou de création de groupes fonctionnels s'effectue à une vitesse plus rapide que la vitesse de diffusion du réactif créateur de groupes fonctionnels ou transformateur des groupes fonctionnels dans les particules, et l'arrêt de la réaction de création de groupes fonctionnels lorsque 68 % à 98 % des sites disponibles pour la création ou la fixation de groupes fonctionnels comportent des groupes fonctionnels, et procédé dans lequel le réactif servant à la fixation de groupes fonctionnels ou la création de groupes fonctionnels ne contient pas de solvant gonflant.

9. Procédé selon la revendication 8, dans lequel les particules du copolymère sont des particules d'un copolymère en forme de gel, et la réaction de fixation ou de création de groupes fonctionnels est arrêtée lorsque la profondeur de la création de groupes fonctionnels représente de 0,32 à environ 0,75 fois le rayon moyen des particules.

10. Procédé selon la revendication 9, dans lequel les particules du copolymère en forme de gel sont des particules sphériques d'un copolymère en forme de gel.

11. Procédé selon la revendication 8, dans lequel les particules du copolymère sont des particules d'un copolymère macroréticulaire.

12. Procédé selon l'une quelconque des revendications 8 à 11, dans lequel le réactif de création de groupes fonctionnels ou de transformation des groupes fonctionnels est de l'acide sulfurique concentré, et les particules du copolymère sont traitées en un état de non gonflement.

13. Procédé selon l'une quelconque des revendications 8 à 12, dans elquel les particules sont des particules d'un polymère polymérisé en suspension, ayant un diamètre d'environ 25 $\mu$m à environ 1 mm.

14. Procédé selon l'une quelconque des revendications 8 à 11, dans lequel les particules du copolymère sont des particules d'un copolymère d'ester acrylique.

15. Procédé d'échange d'ions entre un liquide contenant des ions dissous et une résine échangeuse d'ions, caractérisé en ce qu'il comprend le passage du liquide à travers un lit de particules de résine fortement acide échangeuse de cations, le passage étant effectué à une vitesse plus rapide que celle permettant un équilibre par diffusion dans une résine des mêmes particules dont tous les sites disponibles comportent des groupes fonctionnels (résine "entièrement fonctionnalisée"), les particules de la résine fortement acide échangeuse de cations étant des particules d'une résine selon l'une quelconque des revendications 1 à 7.